# FASCICULE DE BREVET EUROPEEN

(11) **EP 2 864 194 B1**
(45) Date de publication et mention de la délivrance du brevet: **10.08.2016**
(21) Numéro de dépôt: 13730849.0
(22) Date de dépôt: 14.06.2013
(51) Int. Cl.: B64B 1/40, B64B 1/62, B64B 1/60, B64B 1/58

(54) **BALLON STRATOSPHÉRIQUE À TENUE À LA COMPRESSION AMÉLIORÉE**
STRATOSPHÄRENBALLON MIT VERBESSERTER DRUCKFESTIGKEIT
STRATOSPHERIC BALLOON HAVING IMPROVED COMPRESSIVE STRENGTH

(30) Priorité: 20.06.2012 FR 1255761
(43) Date de publication de la demande: 29.04.2015
(73) Titulaire: Airbus Group SAS, 75016 Paris (FR)
(72) Inventeur: GENESTE, Jean-François, F-31200 Toulouse (FR)
(74) Mandataire: Ipside
(86) Numéro de dépôt international: PCT/EP2013/062356
(87) Numéro de publication internationale: WO 2013/189849

(56) Documents cités:
- WO-A2-2011/154797
- GB-A- 299 359
- JP-A- 2002 002 595
- US-A- 5 023 118
- US-A- 5 743 786
- US-A1- 2007 069 077

## Description

La présente invention appartient au domaine des structures. Plus particulièrement, l'invention concerne une structure fermée dont la tenue à la compression est améliorée, sans augmentation de sa masse. L'invention trouve l'application à la réalisation d'un ballon stratosphérique. On connaît le document WO 2011 /154797, qui est considéré comme l'art antérieur le plus proche et décrit un aérostat super-rigide qui comporte une ossature structurale comportant une pluralité d'anneaux.

5 Il est connu que les matériaux sont généralement plus résistants en tension qu'en compression. Par exemple la réalisation d'une structure, telle qu'un tube creux de dimension quelconque, travaillant en traction est aisée tandis que la réalisation d'une structure identique travaillant en compression s'avère compliquée. En effet, pour une dimension donnée, rendre une structure résistante à une force de compression conduit généralement en contrepartie à augmenter considérablement sa masse. Cette augmentation de masse pénalise la conception d'architectures travaillant en compression dans de nombreux domaines d'application industrielle, en particulier dans le domaine aéronautique.

Pour illustrer un exemple, on peut citer le cas des ballons stratosphériques actuels, c'est-à-dire ceux qui volent dans la stratosphère, couche de l'atmosphère terrestre qui commence, aux latitudes tempérées, aux alentours de 20 km d'altitude. Ces ballons sont des ballons dits dérivants, c'est-à-dire qu'il est difficile de les stabiliser en altitude au cours d'une pluralité de cycles diurnes et nocturnes. Cela provient essentiellement du fait que lorsque l'on souhaite piloter de tels ballons, leur alimentation en énergie étant uniquement d'origine solaire, leur équation de masse ne converge pas. Autrement dit, compte tenu des vents, l'énergie nécessaire pour contrer ces derniers et garder une position géostationnaire est trop importante et a une incidence en masse trop importante pour que de tels ballons puissent rester une année en l'air à leur altitude croisière.

Une solution pour gagner de la masse consisterait à remplacer le gaz aérostatique (par exemple l'hélium) contenu dans le ballon par du vide. Par exemple, pour un ballon de 23 000 m³, cela représenterait une économie non négligeable de l'ordre de 300 kg d'hélium. Cependant, la pression à 20 km d'altitude étant de 54 hPa, la force de pression qui s'exercerait sur la structure actuelle du ballon serait trop importante. A l'heure actuelle, aucune structure suffisamment légère ne peut tenir un tel effort.

La mise en oeuvre de structures dont la tenue à la compression est améliorée sans pénalisation de masse s'avère donc important pour des utilisations industrielles, en particulier pour la réalisation de ballons stratosphériques.

Suivant l'invention que décrite par les caractéristiques de la revendication 1, une ossature structurale tridimensionnelle d'un ballon stratosphérique comporte une pluralité d'anneaux gonflables, présentant, dans un état gonflé, selon un plan passant par l'axe de révolution de l'anneau, une section transversale en forme de T, et une pluralité de moyens de stabilisation géométrique de l'ossature structurale dans l'espace, deux anneaux gonflables étant reliés par au moins un moyen de stabilisation géométrique.

De part leur section transversale en T, les anneaux gonflables présentent un volume moindre que des anneaux gonflables de section transversale typiquement circulaire, et par conséquent une masse réduite, principalement du fait qu'à pression égale de fluide interne les anneaux gonflables de section transversale en T ont un volume moindre. Des calculs à la portée de l'homme du métier montrent que les anneaux gonflables de section transversale en T restent néanmoins aussi résistants aux mêmes pressions que les anneaux gonflables de section transversale circulaire.

Les anneaux gonflables sont préférentiellement gonflés à l'air, mais peuvent être gonflé par tout autre fluide, de masse sensiblement équivalente à l'air.

Les moyens de stabilisation géométrique sont disposés entre les anneaux gonflables de sorte à empêcher une déformation géométrique de l'ossature structurale dans l'espace, sous l'effet de forces de pression externes exercées sur ladite l'ossature structurale 10.

L'ossature structurale selon l'invention, présente ainsi une géométrie qui lui permet de résister à des forces de pression externes qui seraient exercées sur elles.

L'ossature structurale est avantageusement destinée à la réalisation de ballons stratosphériques.

Suivant des modes de réalisation préférés, l'invention répond en outre aux caractéristiques suivantes, mises en oeuvre séparément ou en chacune de leurs combinaisons techniquement opérantes.

Dans des modes de réalisation préférés de l'invention, afin ne pas alourdir l'ossature structurale, un moyen de stabilisation géométrique de l'ossature structurale dans l'espace est un élément rigide.

Par rigide, on entend un élément dont la forme et les dimensions ne subissent pas de changements substantiels pendant l'utilisation de l'ossature structurale.

Dans des modes de réalisation préférés de l'invention, un moyen de stabilisation géométrique de l'ossature structurale dans l'espace est un anneau gonflable, présentant une section transversale en forme de T à l'état gonflé.

Dans des modes de réalisation préférés de l'invention, au moins deux anneaux gonflables adjacents présentent chacun un volume interne, lesdits au moins deux volumes internes communiquant entre eux.

Dans un mode préféré de réalisation, tous les anneaux gonflables, attenants au moins deux par deux, présentent chacun un volume interne, tous les volumes communiquant entre eux.

Par le terme « attenants », on entend que deux anneaux gonflables sont en contact l'un avec l'autre.

Dans des modes de réalisation préférés de l'invention, un anneau gonflable présente un volume interne divisé en deux chambres indépendantes se gonflant/dégonflant sélectivement l'une par rapport à l'autre.

Selon l'invention, ledit ballon stratosphérique comporte une ossature structurale telle que définie ci-dessus dans l'un de ses modes de réalisation et une peau tendue sur l'ossature structurale, ladite peau étant tendue lorsque les anneaux gonflables de ladite ossature structurale sont dans un état gonflé.

Le ballon stratosphérique ainsi réalisé est une structure fermée, donc permettant de contenir du vide, entre les anneaux gonflables, et sa géométrie permet de résister à de fortes pressions externes, de l'ordre d'au moins 50 hPa, tout en conservant une masse acceptable. Typiquement, et à titre de comparaison, un ballon stratosphérique actuel de 23000 m³, à 20 km d'altitude, de masse totale de 2 tonnes présenterait une ossature structurale de masse nécessaire à la résistance en pression de l'ordre de 4 T et n'est donc pas réalisable, tandis qu'un ballon stratosphérique suivant un mode de réalisation de l'invention, qui tiendrait le vide et pour une géométrie de type torique, et toujours pour de 2 tonnes de masse totale, verrait la masse de l'ossature structurale s'abaisser jusqu'à environ 600 kg.

L'invention sera maintenant plus précisément décrite dans le cadre de modes de réalisation préférés, qui n'en sont nullement limitatifs, représentés sur les figures 1 à 4, dans lesquelles :
la figure 1 illustre une vue en perspective d'une partie d'un exemple de ballon stratosphérique représenté sous la forme d'un tore, réalisé à partir d'une pluralité d'anneaux gonflables, dans un premier exemple d'agencement, et un agrandissement d'une coupe transversale du tore,
la figure 2 illustre une vue en perspective d'une partie d'un exemple de ballon stratosphérique représenté sous la forme d'un tore, réalisé à partir d'une pluralité d'anneaux gonflables, dans un autre exemple d'agencement, et un agrandissement d'une coupe transversale du tore,
la figure 3 illustre une vue en perspective d'une partie d'un exemple de ballon stratosphérique représenté sous une forme lenticulaire, réalisé à partir d'une pluralité d'anneaux gonflables, dans un autre exemple d'agencement,
la figure 4 illustre une coupe transversale d'un anneau à l'état gonflé, illustrant sa section transversale en forme de T.

L'invention est à présent décrite dans le cas non limitatif d'un ballon stratosphérique 1.

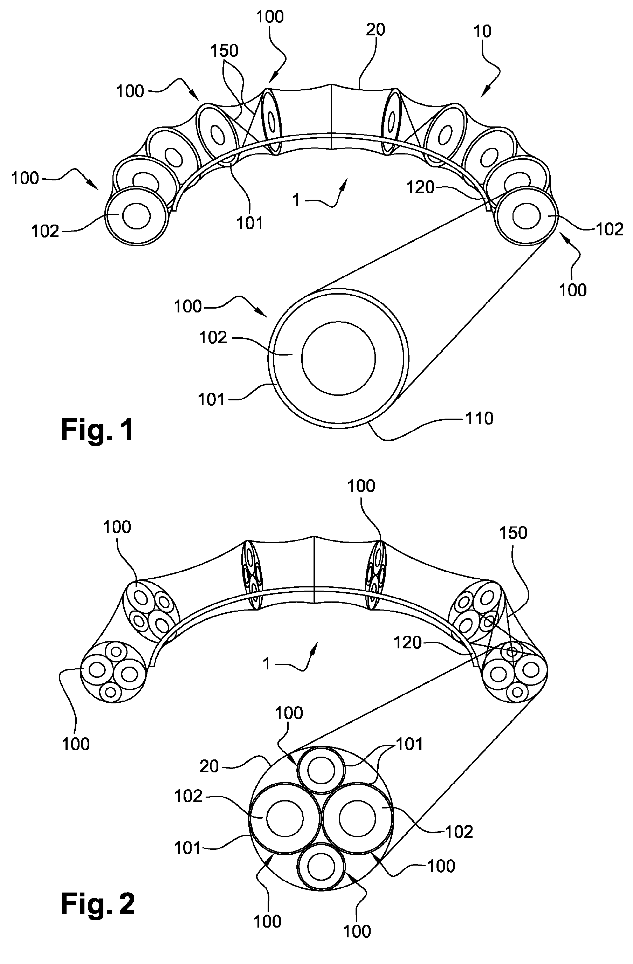

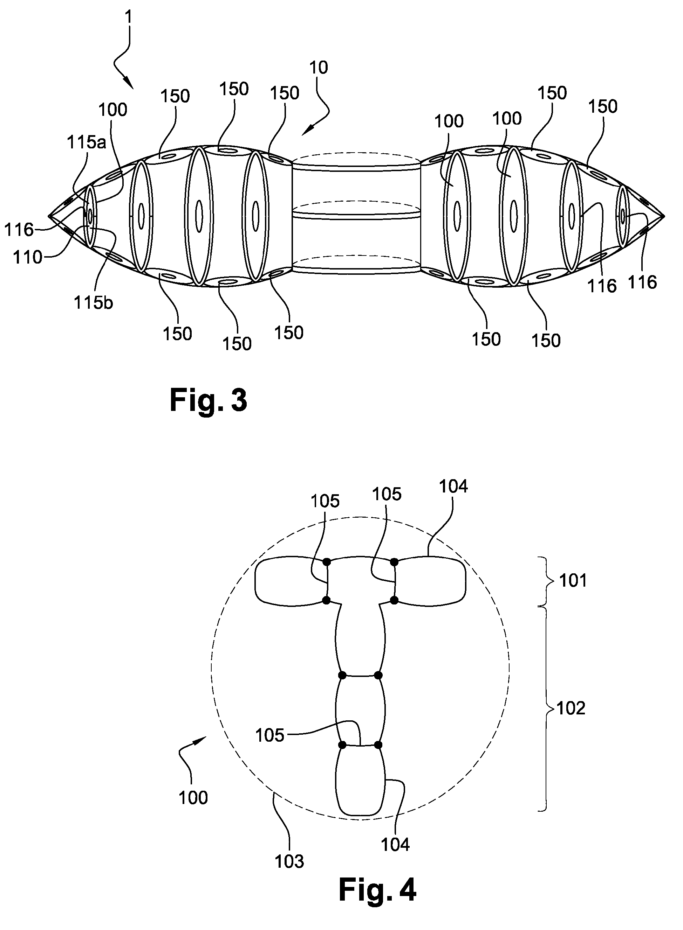

Les figures 1 et 2 décrivent deux exemples de ballon stratosphérique de forme torique. La figure 3 décrit un exemple de ballon stratosphérique de forme lenticulaire.

Le ballon stratosphérique 1 comporte :
- une ossature structurale 10 dans un espace tridimensionnel comportant :
   o une pluralité d'anneaux gonflables 100,
   o une pluralité de moyens 150 de stabilisation géométrique de l'ossature structurale 10 dans l'espace,
- une peau 20 tendue sur l'ossature structurale 10.

Dans l'exemple des figures 1 et 2, par souci de clarté, un demi-tore est représenté. Sur la figure 1, seuls onze anneaux gonflables 100, dans un état gonflé, et quatre moyens de stabilisation géométrique sont illustrés. Sur la figure 2, vingt huit anneaux gonflables 100, dans un état gonflé, et quatre moyens de stabilisation géométrique sont illustrés.

Un anneau gonflable 100 est préférentiellement de forme circulaire et présente un volume interne 110.

L'anneau gonflable 100 se gonfle par introduction d'un fluide dans son volume intérieur 110. Préférentiellement, l'anneau gonflable 100 est gonflé à l'air, celui-ci présentant une masse volumique faible (1,204 kg/m³ à 20°C), mais il peut être également envisagé de le remplir avec d'autre fluide, tel que par exemple de l'hélium, de masse volumique sensiblement plus faible, de l'hydrogène ou encore du méthane.

Dans un mode de réalisation de l'anneau gonflable 100, l'anneau gonflable 100 est réalisé à partir d'une structure à fils entrecroisés, de type treillis tissé, dont le maillage est choisi de telle sorte à résister aux forces de pression internes. La structure est recouverte par un revêtement étanche au fluide interne de gonflage.

Dans un autre mode de réalisation de l'anneau gonflable 100, ledit anneau gonflable 100 est d'une structure à fils entrecroisés, de type treillis tissé, à l'intérieur de laquelle sont injectées des vapeurs polymères qui se déposent sur la structure et se polymérisent sous la forme d'un film très fin de sorte à obturer des portions ajourées de la structure à fils entrecroisés.

Dans les deux modes de réalisation précédents, la structure à fils entrecroisés comporte par exemple des fils en aramide, tels que le Kevlar®.

Dans un état gonflé, l'anneau gonflable 100 présente, selon un plan passant par un axe de révolution de l'anneau gonflable 100, une section transversale en forme de T, avec une tête 101 et un pied 102, comme illustré sur la figure 4.

Pour obtenir une section transversale en forme en T, l'anneau gonflable 100, initialement généralement de section transversale circulaire ou ovale 102, comme illustré en pointillé sur la figure 4, est déformé en forme de T par couture ou piquage de fils, par exemple en Kevlar®.

Avantageusement, une telle section transversale d'anneau gonflable 100 permet, par rapport à une section transversale classique d'anneau gonflable, circulaire ou ovale, une meilleure tenue à la compression pour un volume interne gonflé plus restreint et donc une masse plus faible.

De préférence, le pied 102 du T présente une longueur la plus importante possible. La longueur du pied 102 est fonction de la pression extérieure exercée sur l'anneau gonflable 100, sachant que de manière générale, plus la longueur du pied du T est importante et meilleure sera sa résistance à la pression extérieure exercée.

La tête 101 permet avantageusement une augmentation d'une surface de contact de l'anneau gonflable 100 avec la peau 20. Dans un exemple de dimensionnement, la tête présente une largeur sensiblement égale a une épaisseur du pied 102 du T.

La présente invention ne se limite pas à l'exemple d'un anneau gonflable 100 présentant une section transversale en forme de T, décrits et illustrés. L'homme du métier est en mesure d'adapter l'invention à des sections transversales d'anneau gonflable 100 non décrites qui permettent de tenir la compression dans un minimum de volume, donc une masse de fluide dans le volume interne 110 au moins équivalente que celle de l'anneau gonflable 100 de section transversale en forme de T.

Dans un exemple de section transversale, une section en I peut être envisagée.

Dans un mode de réalisation de l'anneau gonflable 100, comme illustré sur la figure 3, le volume interne 110 de l'anneau gonflable 100 est divisé en deux chambres 115 indépendantes. Les deux chambres indépendantes 115 se gonflent et/ou se dégonflent sélectivement l'une par rapport à l'autre, par exemple au moyen d'une vanne 116. Dans l'exemple de la figure 3, le volume est divisé en deux chambres, une chambre dite supérieure 115a et une chambre dite inférieure 115b. Ainsi, lorsque l'on souhaite faire redescendre lentement le ballon stratosphérique 1, une solution consisterait à dégonfler la chambre inférieure 115b de plusieurs anneaux gonflables 100, permettant au ballon de redescendre tel un parachute.

Dans un mode de réalisation de l'ossature structurale 10, deux anneaux gonflables 100 adjacents sont reliés par au moins un moyen de stabilisation géométrique 150, chaque moyen de stabilisation géométrique 150 étant lié, au niveau de deux extrémités opposées 201, à deux anneaux gonflables 100.

Les moyens de stabilisation géométrique 150 sont disposés de sorte à empêcher une déformation géométrique de l'ossature structurale 10 dans l'espace, sous l'effet de forces de pression externes exercées sur ladite l'ossature structurale 10.

Les moyens de stabilisation géométrique 150 assurent également une stabilité mécanique de l'ossature structurale 10.

Le choix du nombre de moyens de stabilisation géométrique et de leur positionnement entre la pluralité d'anneaux gonflables 100, de sorte à empêcher, dans le plan, une déformation géométrique de l'ossature structurale 10 sous l'effet de forces de pression externe exercées, est à la portée de l'homme du métier.

Dans un premier mode de réalisation de moyen de stabilisation géométrique 150, comme illustré sur les figures 1 et 2, ledit moyen de stabilisation géométrique est un élément inextensible.

Par élément inextensible, on entend un élément qui présente une déformation nulle voire quasi nulle pour les efforts que devra supporter l'ossature structurale 10.

Dans un exemple de réalisation, un élément inextensible 150 est un fil inextensible, permettant de ne pas alourdir l'ossature structurale 10.

Ce fil inextensible est réalisé, par exemple, dans des matériaux tels que de l'aramide, comme par exemple un fil en Kevlar^{®} qui présente de très bonnes propriétés mécaniques en traction (résistance à rupture de l'ordre de 3100 MPa et un module d'Young compris entre 70 et 125 GPa) et en fatigue, ou du composite, comme par exemple un fil en carbone qui présente une résistance à la traction de l'ordre de 7000 MPa et un module d'Young de l'ordre de 520 GPa.

Dans un autre exemple de réalisation, l'élément inextensible 150 est un élément rigide, c'est-à-dire un élément dont la forme et les dimensions ne subissent pas de changements substantiels pendant l'utilisation de l'ossature structurale 10. Cet élément rigide forme entretoise, c'est-à-dire qu'il permet de maintenir un écartement constant entre les anneaux gonflables 100 auxquels il est relié.

Dans l'exemple de la figure 1, deux anneaux gonflables 100 sont reliés par deux éléments inextensibles 150.

Dans un deuxième mode de réalisation, illustré sur la figure 3, un moyen de stabilisation 150 géométrique de l'ossature structurale 10 dans l'espace est un anneau gonflable 100, ou une portion d'anneau gonflable, de section transversale en forme de T à l'état gonflé.

Les anneaux gonflables 100 et 150 sont reliés de sorte que les volumes internes d'au moins deux anneaux gonflables adjacents 100, 150 communiquent entre eux et que le même fluide circule dans les volumes internes et les gonfle.

Préférentiellement, les anneaux gonflables 100 et 150 sont configurés de sorte que les volumes internes de tous les anneaux gonflables 100 communiquent entre eux de sorte que le même fluide circule dans tous les volumes internes et les gonfle. Ainsi, une entrée unique est nécessaire pour gonfler l'ossature structurale 10.

La peau 20 est choisie de sorte à présenter une résistance suffisante pour ne pas se rompre sous les forces de pression externes.

La peau est configurée de sorte à être tendue lorsque l'ensemble des anneaux gonflables 100 constituant l'ossature structurale 10 est à l'état gonflé.

Dans un exemple de peau 20, la peau 20 comporte une membrane étanche à l'air et une structure à fils entrecroisés, de type treillis, dont le maillage est choisi de telle sorte à résister aux forces de pression externes.

Préférentiellement, la membrane est réalisée dans un matériau du type Ethylene tetrafluoroethylene (ETFE).

Préférentiellement, la membrane est réalisée dans un matériau transparent.

Par "matériau transparent", on entend un matériau qui laisse passer le rayonnement solaire et infrarouge avec une absorption minoritaire. Ce matériau peut en particulier être constitué par du polyéthylène ou du polyester, qui sont les matériaux généralement utilisés pour fabriquer les ballons stratosphériques.

Préférentiellement, la structure à fils entrecroisés comporte par exemple au moins un fil en une matière choisie parmi les suivantes : métal, aramide tel que par exemple le Kevlar®, carbone, entre autres.

Dans l'exemple illustré sur la figure 1, la peau 20 est tendue sur un contour périphérique externe de chaque anneau gonflable 100.

Un contour d'un anneau gonflable 100 est formé par une surface externe de la tête du T.

Dans l'exemple illustré sur la figure 2, la peau 20 est tendue sur une partie seulement de la surface externe 104 de la tête 101 du T.

Dans le mode de réalisation du tore des figures 1 et 2, ledit tore comporte en outre une jante 120.

Dans un exemple de réalisation de la jante 120, ladite jante travaillant en compression, la jante est réalisée par une chaîne formée par une pluralité d'anneaux gonflables 100 successifs, de préférence, mais de manière non limitative, de section transversale en forme de T.

Les composants de l'ossature structurale 10 (c'est-à-dire les anneaux gonflables 100 et les moyens 150 de stabilisation géométrique de l'ossature structurale 10 dans l'espace), éventuellement la jante si elle existe, de par leurs natures et leurs formes, sont choisis de sorte que le ballon stratosphérique résiste à des forces de pression externe de l'ordre d'au moins 50 hPa, la charge individuelle dépendant de la géométrie du ballon stratosphérique et du nombre d'anneaux gonflables 100 mis pour le réaliser tout en conservant une masse acceptable.

Dans le cas de l'application au ballon stratosphérique 1, il peut être avantageusement envisagé de remplir le volume interne du ballon stratosphérique, compris entre les anneaux gonflables 150, par du vide. Le poids total du ballon stratosphérique est ainsi considérablement allégé.

La présente invention ne se limite pas à des ballons stratosphériques de forme torique ou lenticulaire. L'homme du métier est en mesure d'adapter l'invention à des formes géométriques de ballons stratosphériques non décrites, telle que par exemple une forme sphérique, ou une forme torique non axisymétrique.

La description ci-avant illustre clairement que par ses différentes caractéristiques et leurs avantages, la présente invention atteint les objectifs qu'elle s'était fixés. En particulier, elle propose une structure fermée ayant une géométrie, par le biais d'une ossature structurale, qui résiste aux forces de compression s'exerçant sur elle, sans pénaliser le poids de la structure.

## Revendications

1. Ballon stratosphérique (1) **caractérisé en ce qu'**il comporte :
- une ossature structurale (10) comportant une pluralité d'anneaux gonflables (100), présentant une section transversale en forme de T dans un état gonflé, et une pluralité de moyens (150) de stabilisation géométrique de l'ossature structurale dans l'espace, deux anneaux gonflables (100) étant reliés par au moins un moyen de stabilisation géométrique (20), et
- une peau (20) sur l'ossature structurale (10), ladite peau étant tendue lorsque les anneaux gonflables (100) de ladite ossature structurale sont dans un état gonflé.

2. Ballon stratosphérique (1) selon la revendication 1 dans lequel un moyen (150) de stabilisation géométrique de l'ossature structurale dans l'espace est un élément rigide.

3. Ballon stratosphérique (1) selon l'une des revendications précédentes dans lequel un moyen (150) de stabilisation géométrique de l'ossature structurale dans l'espace est un anneau gonflable (100), présentant une section transversale en forme de T à l'état gonflé.

4. Ballon stratosphérique (1) selon l'une des revendications précédentes dans lequel au moins deux anneaux gonflables (100) adjacents présentent chacun un volume interne (110), lesdits au moins deux volumes communiquant entre eux.

5. Ballon stratosphérique (1) selon la revendication 4 dans lequel tous les anneaux gonflables (100) présentent chacun un volume interne (110), tous les volumes communiquant entre eux.

6. Ballon stratosphérique (1) selon l'une des revendications précédentes dans lequel un anneau gonflable (100) présente un volume interne (110) divisé en deux chambres (115) indépendantes se gonflant/dégonflant sélectivement l'une par rapport à l'autre.

## Patentansprüche

1. Stratosphärenballon (1), **dadurch gekennzeichnet, dass** er Folgendes umfasst:
- ein Strukturgerüst (10), das eine Vielzahl von füllbaren Ringen (100), die in einem gefüllten Zustand einen T-förmigen Querschnitt aufweist, und eine Vielzahl von Mitteln (150) zur geometrischen Stabilisierung des Strukturgerüsts im Raum umfasst, wobei zwei füllbare Ringe (100) durch mindestens ein Mittel (20) zur geometrischen Stabilisierung verbunden sind, und
- eine Haut (20) auf dem Strukturgerüst (10), wobei die Haut gespannt ist, wenn die füllbaren Ringe (100) des Strukturgerüsts in einem gefüllten Zustand sind.

2. Stratosphärenballon (1) nach Anspruch 1, wobei ein Mittel (150) zur geometrischen Stabilisierung des Strukturgerüsts im Raum ein starres Element ist.

3. Stratosphärenballon (1) nach einem der vorhergehenden Ansprüche, wobei ein Mittel (150) zur geometrischen Stabilisierung des Strukturgerüsts im Raum ein füllbarer Ring (100) ist, der im gefüllten Zustand einen T-förmigen Querschnitt aufweist.

4. Stratosphärenballon (1) nach einem der vorhergehenden Ansprüche, wobei mindestens zwei benachbarte füllbare Ringe (100) jeweils ein inneres Volumen (110) aufweisen, wobei die mindestens zwei Volumen miteinander kommunizieren.

5. Stratosphärenballon (1) nach Anspruch 4, wobei alle füllbaren Ringe (100) jeweils ein inneres Volumen (110) aufweisen, wobei alle Volumen miteinander kommunizieren.

6. Stratosphärenballon (1) nach einem der vorhergehenden Ansprüche, wobei ein füllbarer Ring (100) ein inneres Volumen (110) aufweist, das in zwei unabhängige Kammern (115) unterteilt ist, die gezielt bezüglich einander gefüllt/entleert werden.

## Claims

1. Stratospheric balloon (1), **characterized in that** it comprises:
- a structural framework (10) comprising a plurality of inflatable rings (100), having a T-shaped cross section in an inflated state, and a plurality of means (150) for stabilizing the shape of the structural framework in space, two inflatable rings (100) being connected by at least one shape-stabilizing means (20), and
- a skin (20) on the structural framework (10), said skin being taut when the inflatable rings (100) of said structural framework are in an inflated state.

2. Stratospheric balloon (1), according to Claim 1, in which a means (150) for stabilizing the shape of the structural framework in space is a rigid element.

3. Stratospheric balloon (1), according to either of the preceding claims, in which a means (150) for stabilizing the shape of the structural framework in space is an inflatable ring (100), having a T-shaped cross section in the inflated state.

4. Stratospheric balloon (1), according to one of the preceding claims, in which at least two adjacent inflatable rings (100) each have an internal volume (110), wherein said at least two volumes communicate with each other.

5. Stratospheric balloon (1), according to Claim 4, in which all the inflatable rings (100) each have an internal volume (110), wherein all the volumes communicate with each other.

6. Stratospheric balloon (1), according to one of the preceding claims, in which an inflatable ring (100) has an internal volume (110) divided into two independent chambers (115) which are inflated/deflated selectively with respect to one another.
